# EUROPEAN PATENT SPECIFICATION

(11) **EP 0 920 387 B1**
(45) Date of publication and mention of the grant of the patent: **22.03.2000**
(21) Application number: 97923334.3
(22) Date of filing: 27.05.1997
(51) Int. Cl.: B60N 3/04

(54) **A DEVICE FOR SECURING A MAT IN A MOTOR VEHICLE**
VORRICHTUNG ZUM BEFESTIGEN EINER MATTE IN EINEM KRAFTFAHRZEUG
DISPOSITIF DE FIXATION D'UN TAPIS DANS UN VEHICULE A MOTEUR

(30) Priority: 29.05.1996 DE 29609513 U; 19.12.1996 DE 29622051 U
(43) Date of publication of application: 09.06.1999
(73) Proprietor: Berco B.V., 5482 TK Schijndel (NL)
(72) Inventor: CEELEN, Johannes, Henricus, Franciscus, NL-5461 GH Veghel (NL); HÖLZER, Friedrich, D-74182 Obersulm-Eschenau (DE)
(74) Representative: Fieret, Johannes, Ir.
(86) International application number: NL9700295
(87) International publication number: WO9745291

(56) References cited:
- EP-A- 0 188 639
- EP-A- 0 211 966
- DE-U- 9 300 657
- GB-A- 1 324 729
- GB-A- 2 257 765

## Description

The invention relates to a device for securing a mat to a floor covering of a motor vehicle or the like.

From German "Gebrauchsmuster", DE-U-9115861 a mat for a vehicle is known, which comprises a frame surrounding a hole, through which a screw-like means may be passed to be screwed down in the floor plate or the floor covering of the vehicle. The screw-like means can be detachably fixed to the frame of the hole by means of a special head portion. The fixed anchorage of the screw-like means, which is difficult to mount, in the floor of the vehicle requires a comparatively strong floor covering.

Furthermore a securing device known from German "Gebrauchsmuster" DE-U-9300657, comprises a securing part, which is provided with an upper disc and a lower disc, between which a floor covering present in the vehicle can be clamped. The securing part to be anchored to the floor covering comprises a collar-shaped, upwardly extending part, which is inserted into a circular hole, which has been cut out of the mat to be secured. Said hole in the mat is circumferentially provided with a two-part frame, which surrounds the inner, upper and lower edge parts of the hole. The frame of the hole in the mat to be secured is formed in such a manner that the collar part, which has been inserted into the hole from below, can be detachably fixed to the mat. When the collar part and the frame of the hole are interlocked, the frame of the hole is fixed to the floor covering. The mat can be removed from said collar part, and thus from the floor covering, by releasing the interlocking engagement between the frame of the hole and the collar part.

When this manner of securing a mat is used, the cutting of the hole in the floor covering with a view to anchoring the securing part must take place at exactly the right place in the floor covering. In addition it may be necessary to use an inserting tool or a comparable apparatus for anchoring the securing part to the mat.

GB-A-1 324 729 (which corresponds to the preamble of claim 1) discloses a device for securing a mat to a floor covering of a motor vehicle or the like, comprising a securing part to be anchored in said floor covering as well as a second part placed in a recess in the mat, to which said securing part can be detachably fixed. Said securing part comprises at least two legs, whereby the cover part can be mounted on said securing part in said recess of the mat, thereby securing the mat in an immovable position with respect to said securing part.

Starting from the above-described prior art it is an object of the invention to provide a facility for securing a mat to the floor covering of a motor vehicle or the like, which is simple from an economic point of view and which can be provided in a satisfactory manner.

This objective can be accomplished by means of a device as defined in claim 1.

Starting from the securing device known from the prior art, which comprises a securing part to be anchored in the floor covering as well as a counterpart present in a recess in the mat, to which said securing part can be detachably fixed, the invention is characterized in that said securing part comprises at least two legs, which are capable of pivoting movement with respect to each other, that at least one tooth-shaped or needle-shaped collar part projects from each leg, that the respective distance of each collar part to the pivot axis or the pivot point in one extreme pivoted position of said collar part is at least equal to the corresponding distance in the other extreme pivoted position.

The advantage of a securing device of this kind is that it is no longer necessary to provide a circumferential frame for the hole in the mat and that it will suffice to form a corresponding hole in the mat, for example by cutting out corresponding mat material. Such a mat may be placed directly on the floor covering of a motor vehicle in order to be secured thereto. In that case the securing part is placed in the hole in the mat and the two legs of the securing part are pushed down to their extreme pivoted position. The tooth-shaped or needle-shaped collar parts, which project downwards from said legs, will dig into the floor covering thereby. This will take place at the correct location, since the securing part present in the hole in the mat will take up the correct position relative to said mat. The floor covering does not need to be prepared for anchoring the securing part thereon or therein.

It will be efficient to lock at least that position of the securing part in which said securing part is fixed in the floor covering. This may for example be effected by means of a cover, which may be separate part or a collar-shaped projection provided on a leg of said securing part.

It is beneficial when the two legs of the securing part can be provided in a position in which they extend at an angle of about 180° with respect to each other. The kinematics between said legs, which are thus configured as bell-crank levers, enable the legs to generate a very large force for pressing the collar parts into the floor covering. It is important thereby that the tooth-shaped or needle-shaped collar parts, upon penetrating said floor covering, which movement corresponds with the pivoting movement of the two legs, move through an insertion hole in the floor covering and that they do not tear open the floor covering in the vicinity of said insertion hole. In the latter case the quality of the attachment would be seriously affected.

In this respect it is advantageous that the respective distance of the opposite collar parts does not depend on the pivoted position of the two legs. As a result of that the collar parts will not tear open the upper layer of the floor covering, but penetrate the floor covering in an even manner.

The two legs of the securing part may be interconnected to form a one-piece unit by means of a film hinge. The two legs may also be in the form of separate parts, however. The two legs may thereby abut against one another in a hinge-like manner, possibly supporting each other, or be joined in their pivoting area. Apart from possible savings on production costs, this will furthermore facilitate transport.

It may be useful to provide a possibility to lock the two legs in place in their respective extreme pivoted positions or in a great many randomly selected intermediate positions. This may be effected by means of locking devices, clamping devices or other fixing devices between both legs. It is also possible to effect the desired extended position of the two legs or to fix the legs in their extended position relative to each other by mounting the cover part on the securing part.

In order to prevent the mat from being inadvertently lifted from the floor covering, the cover part may be securely connected to the securing part fixed in the floor covering by means of a circumferential shoulder. This secure connection may be a detachable connection. Thus the cover part may comprise a projection, which can be inserted into a recess in said securing part when said cover part and said securing part are being joined, in such a manner that said cover part and said securing part are fixedly interconnected.

The connection of the cover part to the securing part may be a secure rotatable, slidable or snap-on connection, which may be configured to be detachable again.

In addition to that it has appeared to be useful to form the cover part with at least one recess, indentation, hole-like recess, projecting ribs or folds, in which the tooth-shaped or needle-shaped collar parts may be accommodated until the securing part is fitted. In this manner the risk of users being injured by the points of the collar parts in the unmounted condition has been effectively eliminated.

Further aspects and advantages of the invention will become apparent from the features defined in the other claims and from the following description of embodiments of the construction according to the invention.

The invention will be described and explained with reference to possible embodiments of the device according to the invention, which are illustrated in the accompanying Figures. Where possible, like parts are numbered alike in the various Figures.

Figure 1 is an exploded view of the individual parts of the securing device according to a first embodiment of the invention.

Figure 2 is a sectional view of the parts shown in Figure 1.

Figure 3 is a bottom view of a second embodiment of a securing part according to the invention.

Figure 4 is a sectional view of the securing part according to Figure 3.

Figure 5 diagrammatically shows a third embodiment of a securing part according to the invention.

Figure 6 shows a fourth embodiment of a securing part, wherein a cover part according to the invention is illustrated in dotted lines.

Figure 7a is a side view of a fifth embodiment of a securing part according to the invention in unmounted condition.

Figure 7b shows the securing part of Figure 7a in mounted condition.

Figure 8a is a plan view of a sixth embodiment of a securing part according to the invention.

Figures 8b and 8c are sectional views of parts of the securing part according to Figure 8a.

Figure 8d is a side view of the securing part according to Figure 8a.

Figure 9a shows a second embodiment of a cover part according to the invention, seen in plan view.

Figures 9b and 9c are side views of the embodiment of the cover part according to Figure 9a.

Figures 10 and 11 show two extreme pivoted positions of a securing part according to the invention, which is fitted with a locking projection.

Figure 12 shows the cover part according to Figure 9 connected to a securing part during transport of said parts.

Figure 13 is a plan view of another embodiment of a securing part according to the invention, in an extreme pivoted position thereof.

Figure 14 shows a part of the securing part according to Figure 13 in another extreme pivoted position thereof.

Figures 15 and 16 are sectional views of the securing part according to Figure 13 along lines 15-15 and 16-16 respectively in Figure 13.

Figure 17 is a diagrammatic plan view of another embodiment of a securing part according to the invention.

Figure 18 is a sectional view of Figure 17, along line 18-18 in Figure 17.

Figure 19 is a diagrammatic plan view of another embodiment of a securing part.

Figure 20 is a sectional view of Figure 19, along lines 20-20 in Figure 19.

Figure 21 is a side view of another embodiment of a cover part.

Figure 22 is a plan view of Figure 21.

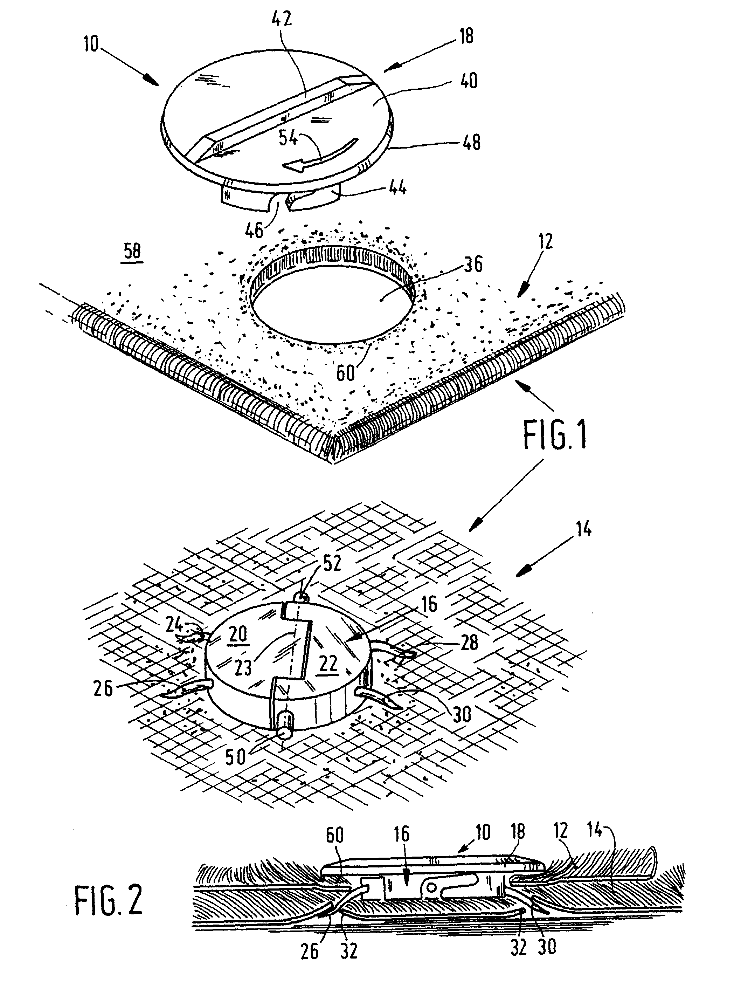

As is shown in Figures 1 and 2, a securing device 10 for securing a mat 12 on for example a floor covering 14 already present in a motor vehicle comprises a securing part 16 and a cover part 18.

A hole 36 is formed in mat 12 for securing said mat 12 by means of such a securing device 10, whereby the shape and the width of said hole is made to conform to the shape and the size of the cover part 18 and/or securing part 16, all this in such a manner that mat 12, once it is secured to for example floor covering 14 by means of device 10, is no longer capable of movement. Hole 36 may also have a shape other than the circular shape shown in Figure 1, such as for example an oval, elliptical or rectangular shape, or a shape derived therefrom.

Securing part 16 has two legs 20, 22, which are pivotally or foldably interconnected via a pivot axis, which is indicated at 23 in Figure 1.

In the embodiment shown in Figures 1 and 2 two needle-shaped points 24, 26 and 28, 30 respectively project from each of the two legs 20, 22 of securing part 16.

When the two legs 20, 22 have been pivoted about pivot axis 23 with respect to each other, from the position shown in Figures 1 and 2 to an extreme position, in which they include an angle with each other, legs 20, 22 can be placed in hole 36 in mat 12, and needle-shaped points 24, 26, 28 and 30 can be inserted into the floor covering 14 present under mat 12, near hole 36. This may be done by exerting pressure on the two legs 20, 22 near pivot pin 23, for example by a person's foot, whereby the two legs 20, 22 are pivoted back to the extreme position shown in Figure 2. Needle-shaped points 24, 26, 28 and 30 will penetrate the floor covering 14 thereby, as will be apparent from Figure 2. In the inserted position shown in Figure 2, wherein mat 12 is secured to floor covering 14 by means of device 10, the needle-shaped points extend through holes 32 that have been formed in floor covering 14 by said points, whereby said points are prevented from tearing the surface of floor covering 14 at this location. In this manner an adequate anchorage of securing part 16 to floor covering 14 has been effected.

Then cover part 18 is fixed to securing part 16. The fact is that cover part 18 comprises a substantially circular plate 40, which has a rib-shaped collar 42 projecting from the upper side thereof. Two more or less diametrically opposite, downwardly extending wall parts 44 are provided on the bottom side of plate 40, in which wall parts L-shaped cuts 46 are formed. Wall parts 44 are positioned slightly inwards of edge 48 of plate 40.

Wall parts 44 comprising the L-shaped cuts 46 are configured such that plate 40 can be placed on securing part 16 in the form of a cap, whereby wall parts 44 extend along the outer circumference of securing part 16 and L-shaped cuts 46 can be slid from above over the ends 50, 52 of pivot pin 23 projecting from securing part 16. Wall parts 44 are thereby retained between the outer circumference of securing part 16 and the inner circumference of hole 36. Cover part 18 may now be turned in the direction indicated by arrow 54, as a result of which a bayonet-like connection between cover part 18 and securing part 16 is effected by means of said L-shaped cuts 46 and the ends 50 and 52 of pivot pin 23 that mate therewith. Thus it is no longer possible to pull cover part 18 in upward direction off securing part 16. The projecting edge 48 of cover part 18 is thereby supported on the upper side 58 of mat 12, near edge 60 of hole 36, so that a solid fixation of mat 12 on floor covering 14 is achieved. Said clamping down of edge 60 of the hole may for example also be effected by means of collar-shaped projections attached to legs 20, 22.

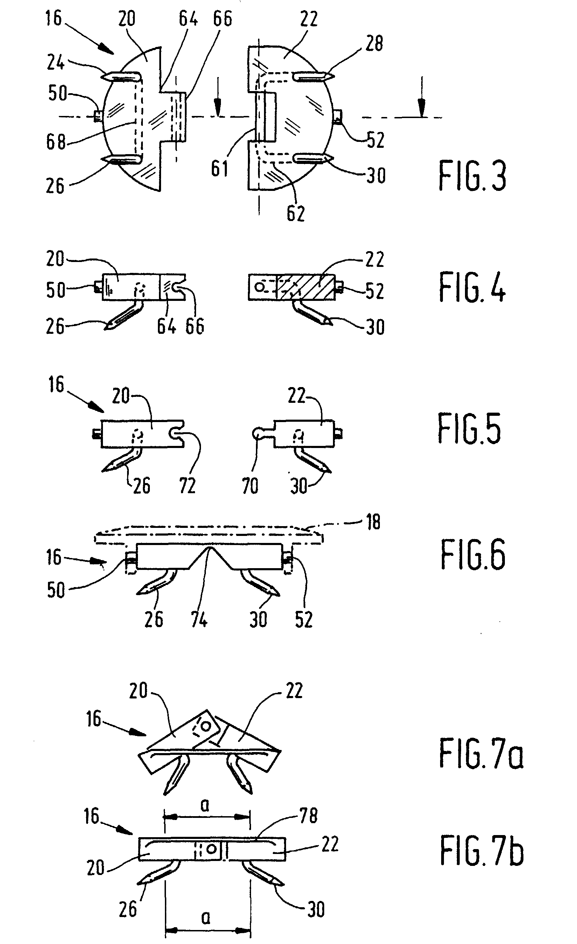

In the embodiment shown in Figures 3 and 4 the pivot axis between the two legs 20 and 22 of securing part 16 is made up of a back part 61 of a U-shaped bow 62 partially embedded in leg 22, which back part 61 extends freely near the central portion of right-hand leg 22.

The free ends of the parallel legs of U-shaped bow 62 make up the needle-shaped points 28 and 30.

Leg 20 comprises a projecting central portion 64, in which a slotted hole 66 is formed for receiving the back part 61 of bow 62 in locking engagement, in such a manner that the two legs 20 and 22 can be pivoted relative to each other about back part 61. In the illustrated embodiment leg 20 is also provided with a U-shaped bow 68 embedded therein, with the free ends of said bow making up the needle-shaped points 24, 26.

Legs 20 and 22 are furthermore provided with diametrically opposite, stud-like projections 50 and 52, which correspond with the ends 50 and 52 of pivot pin 23 of the embodiment according to Figures 1 and 2, which projections function to mount cover part 18 on securing part 16 in the above-described manner.

The securing part 16 shown in Figure 5 also comprises four needle-shaped points, only two of which are shown in the Figure at 26 and 30. In this embodiment the hinged connection forming a pivot axis between the two parts 20 and 22 has been effected by means of a projection 70 having a more or less bone-shaped section, which is provided on leg 22, and by means of a correspondingly configured slot 72 in leg 20. The projection 70 having a bone-shaped section may be clamped down in slot 72 in such a manner as to be capable of pivoting movement therein.

The securing part shown in Figure 6 is a one-piece part made of plastic material, which is provided with a film hinge 74 forming a pivot axis, so that also this securing part 16 has two legs 20 and 22 which can pivot with respect to each other. Said legs are in turn provided with diametrically opposite projections 50 and 52 for mounting cover part 18 on securing part 16 in the above-described manner.

Also the securing part 16 shown in Figures 7a and 7b substantially corresponds with the above-described securing parts.

As is the case with all securing parts, the distance a between the ends of two opposite points 26, 30 and 24, 28 respectively in one extreme position of the two legs 20 and 22, in which said legs include an angle with each other as shown in Figure 7a, is at least substantially equal to the distance a between the base parts of the respective opposite needle-shaped points in the other extreme pivoted position of the two legs 20 and 22 as shown in Figure 7b.

In the embodiment shown in Figures 7a and 7b the two legs are interconnected by means of a strap 78, which is located below pivot axis 23 in the position shown in Figure 7a and above pivot axis 23 in the position shown in Figure 7b, and which thus tends to retain said legs in the two extreme positions.

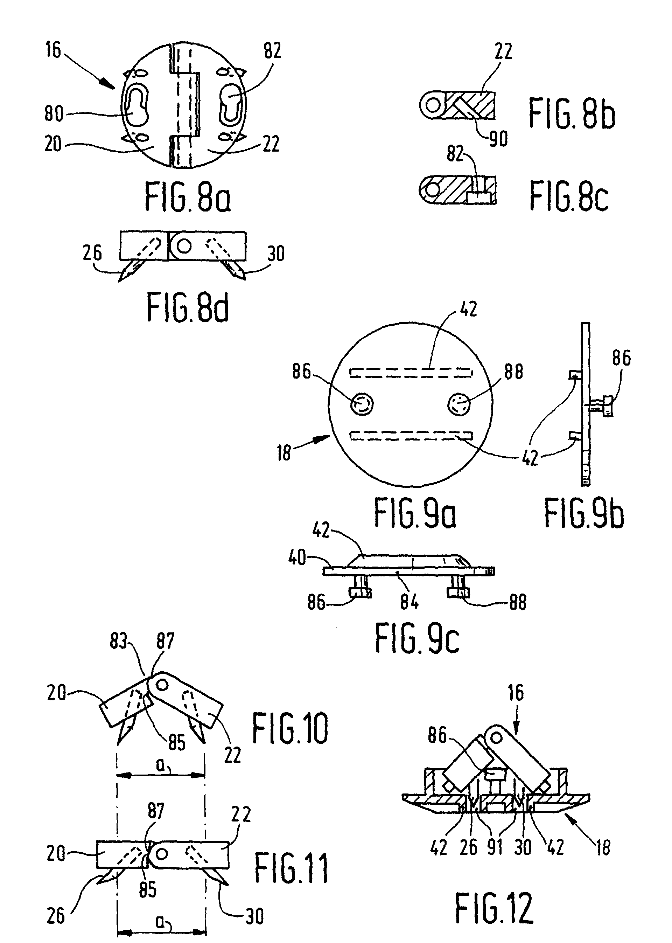

The embodiment according to Figures 8a-8c comprises four loose needle-shaped points, but it will be apparent that this embodiment may also comprise the needle-shaped points according to the preceding embodiments.

In the embodiment according to Figures 8a-8c opposite keyhole-shaped recesses 80, 82 are provided in the upper side of the securing part. The cover part 18 shown in Figures 9a-9c, which is intended to mate with the securing part 16 shown in Figures 8a-8c, comprises mushroom-shaped projections 86 and 88 on the bottom side 84 of plate-shaped part 40, which projections are to be inserted into keyhole-shaped recesses 80 and 82, whereby cover part 18 can be locked in position with respect to securing part 16 by turning cover part 18 relative to securing part 16, thus preventing the two legs 20, 22 of said securing part from pivoting from the position that is for example shown in Figure 8d.

Locking or clamping cams are provided in recesses 80, 82 and/or on projections 86, 88, which cams function to prevent the cover part from undesirably rotating backwards with respect to the securing part.

As will furthermore be apparent from figures 8b and 8d, the needle-shaped points 26, 30 are made up of loose parts in this embodiment, which are inserted into holes 90 provided in legs 20, 22.

In this embodiment two parallel collars 42 extending parallel to each other are provided on the upper side of cover part 18 instead of the one collar 42 of the first embodiment, which collars are used in rotating cover 18 relative to securing part 16. Said collars 42 may also function as protective walls for the needle-shaped points 26 and 30, as will be explained in more detail hereafter with reference to Figure 12.

From the two extreme pivoted positions of legs 20 and 22 shown in Figures 10 and 11 it is once again apparent that the distance a between the free ends of needle-shaped points in the one extreme position (Figure 10), in which the two pivoted parts 20 and 22 include an angle with each other, is at least substantially equal to the distance a between the bases of said needle-shaped points in the other extreme position, in which legs 20 and 22 are at least substantially in line (Figure 11). This is important for obtaining the desired effect, that is, preventing the surface of floor covering 14 from being torn open when securing part 16 is being fixed to floor covering 14.

In the embodiment shown in Figures 10 and 11 the two legs 20 and 22 are furthermore provided with opposite locking means 83, 87 and 85, 87 respectively. In the position of the two legs 20 and 22 shown in Figure 10 the two locking means 83 and 87 lock legs 20 and 22 in their relative positions, whilst in the position shown in Figure 11 the locking of said legs in the illustrated position is effected by locking means 85 and 87. Legs 20 and 22 will also be locked in the position shown in Figure 11 when cover part 18 is not mounted on securing part 16 yet, therefore.

As is furthermore shown in more detail in Figure 12, the cover part shown in Figures 9a-9c may be provided with recesses 91, into which the needle-shaped points, such as points 26 and 30 shown in Figure 12, of a securing part 16 can be inserted when the two legs 20 and 22 of said securing part 16 have been moved to a position in which they include an angle with each other. It will be apparent that when cover part 18 has thus been joined to securing part 16, the needle-shaped points of said securing part will be covered, thus avoiding any risk of injury to people during the packing and transport of said parts. When the securing device is going to be used, cover 18 may be removed from the securing part again.

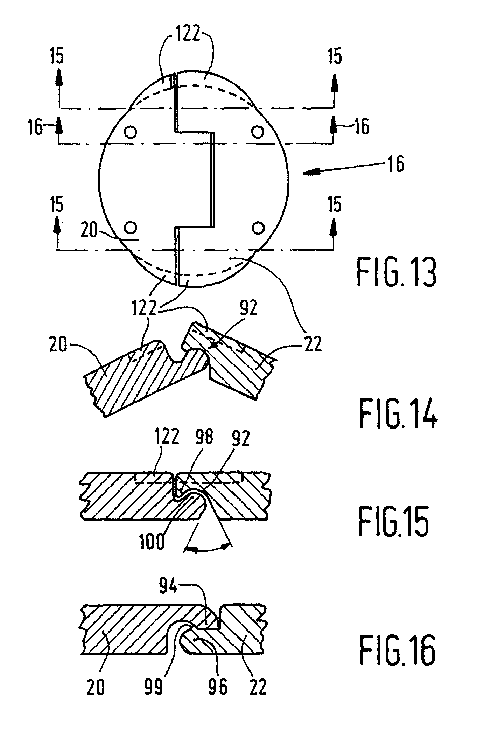

Securing part 16 according to Figures 13-16 has a strong similarity to the securing part 16 shown in Figure 8. In the embodiment according to Figures 13-16, however, the two legs 20 and 22 are not interconnected by means of a separate pin, but they are loosely provided one on top of the other in the position in which they include an angle with each other, as is shown in Figure 14. In the position in which the two legs are in line, as shown in Figure 13, the usual fixed interconnection of the two legs may be provided by cover part 18, as has been explained above. As will be explained in more detail below, said fixed interconnection may also be provided by locking the two legs in position with respect to each other.

As is shown in more detail in Figure 14, the two legs are interconnected by means of hinged shell constructions 92, which are provided near the upper and lower sides of the two legs 20 and 22, seen in Figure 13. Between said two hinged shell constructions 92 a projection 94 is provided on left-hand leg 20, which projection mates with a shoulder 96 provided on the other leg 22. The two legs 20 and 22 are kept together as a result of the mating relationship between hinged shell constructions 92 and the projection-shoulder construction 94, 96. Preferably said hinged shell constructions and the projection-shoulder construction(s) are arranged symmetrically, with for example either two outer hinged shell constructions 92 and one centrally located projection-shoulder construction 94, 96, as shown in Figure 13, or for example two outer projection-shoulder constructions 94, 96 and one hinged shell construction 92 centrally located between said projection-shoulder constructions 94, 96. Also different numbers and positions of said parts 92; 94, 96 will be possible.

When the needle-shaped points "dig into" a floor covering, the cams 98, 100 provided on the facing end sides of the two legs 20 and 22, which engage one another in a more or less embracing manner at the end sides of hinged shell construction 92, prevent the two legs 20 and 22 from moving apart and thus losing their hinged connection.

The securing part 16 configured in this manner can be produced in a very advantageous and inexpensive manner by means of an injection moulding technique, since a metal pin or a pin made of another material is not required and the provision of such a pin does not need to be included in the production process, therefore. The two legs are merely placed one on top of the other and moved into engaging relationship or joined by exerting a slight pressure thereon.

Securing part 16 furthermore comprises a locking device, by means of which selected pivoted positions of the two legs 20 and 22 can be locked. In the present case an upwardly extending locking cam 99 is provided in shoulder 96 of right-hand leg 22. Projection 94, which engages round locking cam 99 from above, seen in Figure 16, has a slightly narrowed section, so that it is capable of snapping over locking cam 99 when the two legs pivot relative to each other.

In the position shown in Figure 16 the two legs 20 and 22 occupy their extended position in which they are in line, in which position they will be fixed to a floor covering 14 of a vehicle. In the position prior to said fixation, which is shown in Figure 14, the two legs are prevented from assuming a steeper position because said legs abut against one another with flat surfaces. The locking cam 99 shown in Figure 16 prevents the two legs from being inadvertently separated laterally and radially. The narrow configuration of projection 94 furthermore makes it possible to effect an interlocking relationship between the two legs.

The two extreme pivoted positions may be locked even more securely by providing projection 94 with recesses to be engaged by said locking cam 99.

As is furthermore shown in the Figures, diametrically opposite, outwardly extending projections 122 may be provided near the pivot axis, which projections are each attached in part to a leg 20 and in part to a leg 22, in such a manner that the respective parts of projections 122 attached to leg 20 and leg 22 are capable of pivoting movement along with legs 20 and 22 with respect to each other.

After the provision of a securing part 16 for securing a mat, projections 122 will abut against the upper side of the mat 12 in question, as is for example also the case with the projecting edge 48 or plate 40 of cover part 18.

Projections 122 are provided in particular near the pivot axis so as not to be in the way when securing part 16 is being fitted. If projections would be provided on the right and on the left on legs 20 and 22, seen in Figure 13, said projections would either have a short, projecting length or comprise an upwardly arcuate part.

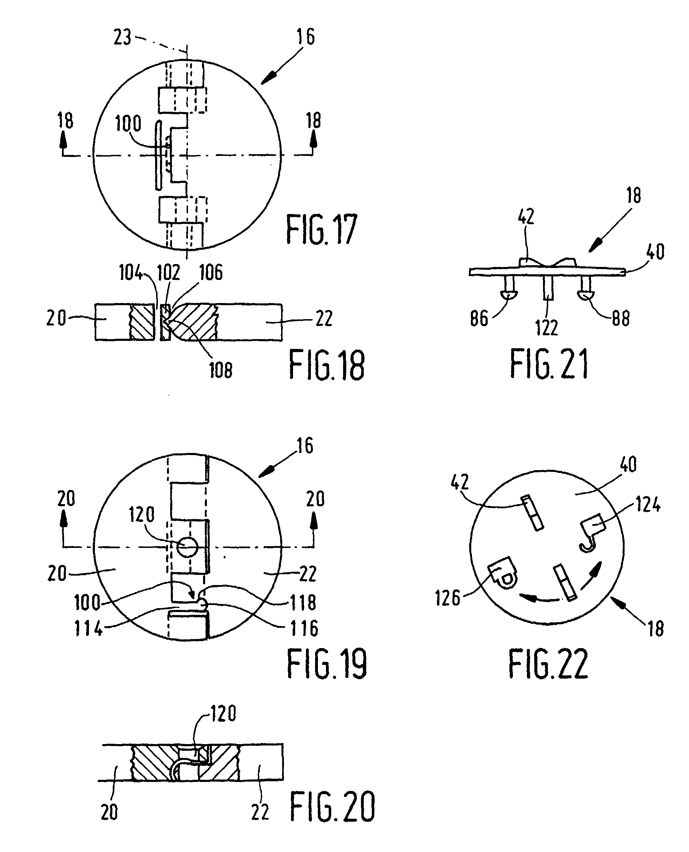

The securing part shown in Figures 17 and 18 is fitted with a locking device 100 extending parallel to imaginary pivot axis 23.

Said locking device comprises a bridge portion 102, which is provided on the left-hand leg 20, seen in Figure 8, and which is laterally bounded by an air gap 104. An air gap 106 is present on the opposite side as well. Said air gap may be bridged by a projection 108 provided on right-hand leg 22, and is located near the centre thereof, all this in such a manner that in the extended position of securing part 16 shown in Figure 18 said projection 108 engages a groove provided in bridge portion 102. It will be apparent that the two legs 20 and 22 are thus locked with respect to each other in their aligned position.

It is conceivable that instead of the one projection 108 further projections 108 are provided at other locations, so that the two legs 20 and 22 can also be locked against pivoting movement with respect to each other in other pivoted positions.

Also the embodiment according to Figures 19 and 20 comprises a locking device 100, which, unlike the embodiment according to Figures 17 and 18, comprises parts that engage each other laterally. The left-hand leg 20, seen in Figure 19, is to that end fitted with a spring element 114, which is provided at one end with a nose-shaped projection 116. In a corresponding desired pivoted position of the two legs 20 and 22 with respect to each other said projection 116 corresponds with a recess 118 in leg 22, which recess will be positioned opposite projection 116 in a desired pivoted position of the two legs 20 and 22 with respect to each other, so that projection 116 can snap into recess 118.

As is furthermore illustrated in Figures 19 and 20, a central bore 120 extending through parts of both legs 20 and 22 is provided in securing part 16, through which bore a bar-shaped member can be inserted for locking the two legs 20 and 22 relative to each other in the position shown in Figures 19 and 20.

Such a bar-shaped member may efficiently form part of cover part 18, as is shown in Figures 21 and 22. In this embodiment two aligned ribs 42 are provided on the upper side of plate 40 of cover part 18 with a view to rotating cover part 18 therewith.

Mushroom-shaped projections 86, 88 are provided on the bottom side of the cover part, as explained above with reference to Figure 9, which projections are to mate with keyhole-shaped recesses not shown in Figures 19 and 20 (see also Figure 8).

Furthermore a pin 122 is provided on the bottom side of plate 40 of the cover part, which pin will be inserted into hole 102 when said cover part is being mounted.

As is furthermore apparent from Figure 22, marks 124, 126, which are self-explanatory, may be provided on the upper side of the cover part for indicating the direction in which cover part 18 must be turned in order to be secured or be removed.

Preferably the securing part 16 is provided in such a manner that needle-shaped points 24, 26, 28 and 30 extend transversely to the longitudinal direction of the vehicle. In order to make it easier to provide said securing part correctly, a suitable mark, for example one or more arrows, may be provided on the upper side of said securing part, which arrows may for example extend transversely to the longitudinal direction of needle-shaped points 24, 26, 28 and 30, so that an optimum positioning of the securing part in question will be ensured when care is taken at the time of fixing said securing part that said mark extends in the longitudinal direction of the vehicle.

Of course additions and modifications to the abovedescribed embodiments are conceivable if not thereby departing from the scope of the invention as defined in the appended claims.

## Claims

1. A device (10) for securing a mat (12) to a floor covering (14) of a motor vehicle or the like, comprising a securing part (16) to be anchored in said floor covering (14) as well as a second part (18) placed in a recess (36) in the mat (12), to which said securing part (16) can be detachably fixed, whereby said securing part (16) comprises at least two legs (20, 22) and said second part is a cover part (18) and can be mounted on said securing part (16) in the recess (36) of the mat (12), thereby securing the mat (12) in an immovable position with respect to said securing part (16), characterized in that said two legs (20, 22) of the securing part (16) are capable of pivoting movement with respect to each other, that at least one tooth-shaped or needle-shaped anchoring part (24, 26, 28, 30) projects from a leg (20, 22), and that the distance (a) of an anchoring part (24, 26, 28, 30) to the pivot axis (23) or to the pivoting centre in one extreme pivoted position of said securing part (16) is about equal to the corresponding distance (a) in the other extreme pivoted position.

2. A device according to claim 1, characterized in that said cover part (18) is provided with a collar extending over the mat to be secured.

3. A device according to claim 1 or 2, characterized in that said securing part (16) is provided with a collar (122) extending over the mat to be secured.

4. A device according to any one of the preceding claims, characterized in that said legs (20, 22) can be pivoted to an extended position, in which said legs extend at an angle of about 180° relative to each other.

5. A device according to any one of the preceding claims, characterized in that two legs (20, 22) are interconnected in the same manner as bell-crank levers.

6. A device according to any one of the preceding claims, characterized in that two legs (20, 22) can be locked in at least one position relative to each other by means of a locking device.

7. A device according to claim 6, characterized in that said locking device is provided with cam-shaped projections (98, 108, 116), which are provided on at least one of said legs (20, 22).

8. A device according to claim 7, characterized in that a cam-shaped projection (116) and/or a counter surface (94, 102) mating with said projection in locking relationship is/are resilient.

9. A device according to any one of the preceding claims, characterized in that two legs (20, 22) are made in one piece, and that they are interconnected via a film hinge (74).

10. A device according to any one of the preceding claims, characterized in that two legs (20, 22) are configured in such a manner near their common pivot point that they can be joined (61, 66; 70, 72).

11. A device according to any one of the preceding claims, characterized in that two legs (20, 22) can be interconnected via a connecting means (78), whereby said two legs can be secured in an extreme and/or an extended pivoted position relative to each other by said connecting means (78).

12. A device according to any one of the preceding claims, characterized in that said cover part (18) comprises at least one projection (86, 88), which projection can be inserted into a recess (80, 82) in said securing part (16) when said cover part (18) and said securing part (16) are being joined, in such a manner that said cover part (18) and said securing part (16) are fixedly interconnected.

13. A device according to any one of the preceding claims, characterized in that said cover part (18) comprises at least one projection (86, 88), which projection can be inserted into a recess (50, 52) in said securing part (16) when said cover part (18) and said securing part (16) are being joined, in such a manner that said cover part (18) and said securing part (16) are interconnected.

14. A device according to any one of the preceding claims, characterized in that said cover part (18) can be rotatably or slidably mounted on said securing part (16) or be snapped thereon.

15. A device according to any one of the preceding claims, characterized in that said cover part (18) comprises at least one recess (42), and that in the unmounted condition of said securing part (16) said cover part (18) can be placed on said securing part (16) in such a manner that the recess (42) present in said cover part (18) protectively accommodates the free ends of said tooth-shaped or needle-shaped projections (24 - 30).

16. A device according to any one of the preceding claims, characterized in that said two legs (20, 22) are provided with projections (24, 26, 28, 30), which slope downwards from the legs in question, in a direction away from each other.

## Patentansprüche

1. Vorrichtung (10) zur Befestigung einer Matte (12) an einer Bodenabdeckung.(14) eines Motorfahrzeuges o.ä. mit einem Befestigungsteil (16), der in der Bodenabdeckung (14) zu verankern ist, sowie einem zweiten Teil (18), der in einer Ausnehmung (36) in der Matte (12), an der der Befestigungsteil (16)lösbar fixiert werden kann, angeordnet ist, wobei der Befestigungsteil (16) mindestens zwei Schenkel (20,22) umfaßt und der zweite Teil ein Abdeckteil (18) ist und am Befestigungsteil (16) in der Ausnehmung (36) der Matte (12) montiert werden kann, um auf diese Weise die Matte (12) in einer unbeweglichen Position relativ zum Befestigungsteil (16) zu befestigen, dadurch gekennzeichnet, daß die beiden Schenkel (20,22) des Befestigungsteiles (16) in der Lage sind, eine Schwenkbewegung relativ zueinander durchzuführen, daß mindestens ein zahnförmiger oder nadelförmiger Verankerungsteil (24,26,28,30) von einem Schenkel (20,22) vorsteht und daß der Abstand (a) zwischen einem Verankerungsteil (24,26,28,30) und der Schwenkachse (23) oder dem Schwenkpunkt in einer extremen Schwenkstellung des Befestigungsteiles (16) etwa dem entsprechenden Abstand (a) in der anderen extremen Schwenkstellung entspricht.

2. Vorrichtung nach Anspruch 1, dadurch gekennzeichnet, daß der Abdeckteil (18) mit einem Kragen versehen ist, der sich über die zu befestigende Matte erstreckt.

3. Vorrichtung nach Anspruch 1 oder 2, dadurch gekennzeichnet, daß der Befestigungsteil (16) mit einem Kragen (122) versehen ist, der sich über die zu befestigende Matte erstreckt.

4. Vorrichtung nach einem der vorangehenden Ansprüche, dadurch gekennzeichnet, daß die Schenkel (20,22) in eine erweiterte Position schwenkbar sind, in der sich die Schenkel unter einem Winkel von etwa 180° relativ zueinander erstrecken.

5. Vorrichtung nach einem der vorangehenden Ansprüche, dadurch gekennzeichnet, daß zwei Schenkel (20,22) in der gleichen Weise wie Winkelhebel verbunden sind.

6. Vorrichtung nach einem der vorangehenden Ansprüche, dadurch gekennzeichnet, daß zwei Schenkel (20,22) mit Hilfe einer Verriegelungsvorrichtung in mindestens einer Position relativ zueinander verriegelt werden können.

7. Vorrichtung nach Anspruch 6, dadurch gekennzeichnet, daß die Verriegelungsvorrichtung mit nockenförmigen Vorsprüngen (98,108,116) versehen ist, die an mindestens einem der Schenkel (20,22)vorgesehen sind.

8. Vorrichtung nach Anspruch 7, dadurch gekennzeichnet, daß ein nockenförmiger Vorsprung (116) und/oder eine an den Vorsprung in einer verriegelnden Beziehung angepaßte Gegenfläche (94,102) elastisch sind/ist.

9. Vorrichtung nach einem der vorangehenden Ansprüche, dadurch gekennzeichnet, daß zwei Schenkel (20,22) einstückig ausgebildet und über ein Filmscharnier (74) verbunden sind.

10. Vorrichtung nach einem der vorangehenden Ansprüche, dadurch gekennzeichnet, daß zwei Schenkel (20,22) in der Nähe ihres gemeinsamen Schwenkpunktes so ausgebildet sind, daß sie miteinander verbunden werden können (61,66;70,72).

11. Vorrichtung nach einem der vorangehenden Ansprüche, dadurch gekennzeichnet, daß zwei Schenkel (20,22)über eine Verbindungseinrichtung (78)verbunden werden können, wodurch die beiden Schenkel in einer extremen und/oder einer erweiterten Schwenkstellung über die Verbindunseinrichtung (78) relativ zueinander befestigt werden können.

12. Vorrichtung nach einem der vorangehenden Ansprüche, dadurch gekennzeichnet, daß der Abdeckteil (18) mindestens einen Vorsprung (86,88) umfaßt, der in eine Ausnehmung (80,82) im Befestigungsteil (16) eingesetzt werden kann, wenn der Abdeckteil (18) und der Befestigungsteil (16) miteinander verbunden sind, derart, daß der Abdeckteil (18) und der Befestigungsteil (16) fest miteinander verbunden sind.

13. Vorrichtung nach einem der vorangehenden Ansprüche, dadurch gekennzeichnet, daß der Abdeckteil (18) mindestens einen Vorsprung (86,88) umfaßt, der in eine Ausnehmung (50,52) im Befestigungsteil (16) eingesetzt werden kann, wenn der Abdeckteil (18) und der Befestigungsteil (16) verbunden werden, derart, daß der Abdeckteil (18) und der Befestigungsteil(16) verbunden sind.

14. Vorrichtung nach einem der vorangehenden Ansprüche, dadurch gekennzeichnet, daß der Abdeckteil (18) drehbar oder gleitbar am Befestigungsteil (16)montiert oder hieran verrastet werden kann.

15. Vorrichtung nach einem der vorangehenden Ansprüche, dadurch gekennzeichnet, daß der Abdeckteil (18) mindestens eine Ausnehmung (42) umfaßt und daß der Abdeckteil (18) im nichtmontierten Zustand des Befestigungsteiles (16) derart am Befestigungsteil (16)angeordnet werden kann, daß die im Abdeckteil (18) vorhandene Ausnehmung (42) die freien Enden der zahnförmigen oder nadelförmigen Vorsprünge (24-30) schützend aufnimmt.

16. Vorrichtung nach einem der vorangehenden Ansprüche, dadurch gekennzeichnet, daß die beiden Schenkel (20,22) mit Vorsprüngen (24,26,28,30) versehen sind, die sich von den in Rede stehenden Schenkeln in einer Richtung voneinander weg schräg nach unten erstrecken.

## Revendications

1. Dispositif (10) de fixation d'un tapis (12) sur un revêtement de sol (14) d'un véhicule à moteur ou similaire, comprenant une pièce de fixation (16) devant être attachée dans ledit revêtement de sol (14) ainsi qu'une deuxième pièce (18) placée dans un évidement (36) ménagé dans le tapis (12) à laquelle ladite pièce de fixation (16) peut être fixé de manière amovible, dans lequel ladite pièce de fixation (16) comprend au moins deux pattes (20, 22) et ladite deuxième pièce est une pièce de recouvrement (18) et peut être installée sur ladite pièce de fixation (16) dans l'évidement (36) ménagé dans le tapis (12), fixant ainsi le tapis (12) en position inamovible par rapport à ladite partie de fixation (16), caractérisé en ce que lesdites deux pattes (20, 22) de la pièce de fixation (16) sont capables d'effectuer un mouvement de pivotement l'une par rapport à l'autre, en ce qu'au moins une pièce d'attache en forme de dent ou d'aiguille (24, 26, 28, 30) fait saillie depuis une patte (20, 22) et en ce que la distance (a) d'une pièce d'attache (24, 26, 28, 30) à l'axe de pivot (23) ou au centre de pivotement dans une position de pivotement extrême de ladite pièce de fixation (16) est approximativement égale à la distance correspondante (a) dans l'autre position de pivotement extrême.

2. Dispositif selon la revendication 1, caractérisé en ce que ladite pièce de recouvrement (18) est munie d'une collerette s'étendant par-dessus le tapis devant être fixé.

3. Dispositif selon la revendication 1 ou 2, caractérisé en ce que ladite pièce de fixation (16) est munie d'une collerette (122) s'étendant par-dessus le tapis devant être fixé.

4. Dispositif selon l'une quelconque des revendications précédentes, caractérisé en ce que lesdites pattes (20, 22) peuvent être amenées à pivoter vers une position étendue dans laquelle lesdites pattes s'étendent selon un angle d'environ 180° l'une par rapport à l'autre.

5. Dispositif selon l'une quelconque des revendications précédentes, caractérisé en ce que deux pattes (20, 22) sont reliées l'une à l'autre de la même manière que des leviers coudés.

6. Dispositif selon l'une quelconque des revendications précédentes, caractérisé en ce que deux pattes (20, 22) peuvent être verrouillées dans au moins une position l'une par rapport à l'autre à l'aide d'un dispositif de verrouillage.

7. Dispositif selon la revendication 6, caractérisé en ce que ledit dispositif de verrouillage est muni de saillies en forme de came (98, 108, 116) qui sont prévues sur au moins une desdites pattes (20, 22).

8. Dispositif selon la revendication 7, caractérisé en ce qu'une saillie en forme de came (116) et/ou une surface contraire (94, 102) en accouplement avec ladite saillie en relation de verrouillage est/sont élastique(s).

9. Dispositif selon l'une quelconque des revendications précédentes, caractérisé en ce que deux pattes (20, 22) sont faites d'une seule pièce, et en ce qu'elles sont reliées entre elles par l'intermédiaire d'une charnière de film (74).

10. Dispositif selon l'une quelconque des revendications précédentes, caractérisé en ce que deux pattes (20, 22) sont configurées de telle manière près de leur point de pivot commun qu'elles puissent être jointes (61, 66 ; 70, 72).

11. Dispositif selon l'une quelconque des revendications précédentes, caractérisé en ce que deux pattes (20, 22) peuvent être reliées l'une à l'autre à l'aide de moyens de connexion (78), de telle sorte que lesdites deux pattes puissent être fixées dans une position de pivotement extrême et/ou étendue l'une par rapport à l'autre par lesdits moyens de connexion (78).

12. Dispositif selon l'une quelconque des revendications précédentes, caractérisé en ce que ladite partie de recouvrement (18) comprend au moins une saillie (86, 88), laquelle saillie peut être insérée dans un évidement (80, 82) ménagé dans ladite pièce de fixation (16) lorsque ladite pièce de recouvrement (18) et ladite pièce de fixation (16) sont assemblées, de telle sorte que ladite pièce de recouvrement (18) et ladite pièce de fixation (16) soient reliées l'une à l'autre de manière fixe.

13. Dispositif selon l'une quelconque des revendications précédentes, caractérisé en ce que ladite partie de recouvrement (18) comprend au moins une saillie (86, 88), laquelle saillie peut être insérée dans un évidement (50, 52) ménagé dans ladite pièce de fixation (16) lorsque ladite pièce de recouvrement (18) et ladite pièce de fixation (16) sont assemblées, de telle sorte que ladite pièce de recouvrement (18) et ladite pièce de fixation (16) soient reliées l'une à l'autre.

14. Dispositif selon l'une quelconque des revendications précédentes, caractérisé en ce que ladite pièce de recouvrement (18) peut être installée de manière rotative ou coulissante sur ladite pièce de fixation (16) ou être fixée dessus par enclenchement.

15. Dispositif selon l'une quelconque des revendications précédentes, caractérisé en ce que ladite pièce de recouvrement (18) comprend au moins un évidement (42) et en ce que, dans l'état non installé de ladite pièce de fixation (16), ladite pièce de recouvrement (18) peut être placée sur ladite pièce de fixation (16) de telle sorte que l'évidement (42) présent dans ladite pièce de recouvrement (18) reçoive, de manière à les protéger, les extrémités libres desdites saillies en forme de dent ou d'aiguille (24 à 30).

16. Dispositif selon l'une quelconque des revendications précédentes, caractérisé en ce que lesdites deux pattes (20, 22) sont munies de saillies (24, 26, 28, 30) qui sont inclinées vers le bas depuis les pattes en question, en s'éloignant les unes des autres.
